# EUROPEAN PATENT APPLICATION

(11) **EP 4 343 051 A1**
(43) Date of publication of application: **27.03.2024**
(21) Application number: 21940713.7
(22) Date of filing: 18.05.2021
(51) Int. Cl.: D06F 95/00

(54) **SELF-SERVICE LAUNDRY SYSTEM**

(71) Applicant: Wash-Plus Co., Ltd., Urayasu-shi, Chiba 279-0004 (JP)
(72) Inventor: TAKANASHI, Kentaro, Urayasu-shi, Chiba 279-0004 (JP)
(74) Representative: Global IP Europe Patentanwaltskanzlei
(86) International application number: PCT/JP2021/018767
(87) International publication number: WO 2022/244096

(57) **Abstract**

[Problem] To provide a self-service laundry system that enhances user convenience and other benefits.

[Means for Solving the Problem] A self-service laundry system 1 that is characterized by having at least one surface of laundry machine 10 provided with a linkage unit (transceiver 15), a controller (server 23) that has a linkage means (server 23 and a program to execute step S21) to link one smartphone 51 of the users and one laundry machine 10 using the linkage unit (transceiver 15), after the linking, an operation command output means (server 23 and a program to execute steps S29-S33) that outputs operation commands to laundry machine 10 linked to smartphone 51, based on operation request signals from the smartphone 51, and a smartphone that communicates with the controller using the predetermined web page accessed by the web browser.

## Description

### [Technical Field]

The present invention relates to a self-service laundry system, more specifically, concerns technology to enhance user convenience and other benefits.

### [Background Art]

Users visiting a coin-operated self-service laundry (so-called coin-operated laundry) are required to insert coins into the money-insertion machine, operate various settings and start button on washing machines and dryers to wash and dry clothes according to the number and type of clothes (see Patent Document 1).

Users may head outside to stores and restaurants to shop and eat while waiting for the washing machine or dryer to complete its operation (see Patent Document 2).

However, the conventional coin-operated laundries described above have various problems that need to be solved, as listed below.

When a washing machine or dryer does not work due to clogging of coins in the coininsertion slot, users call the installation company from the phone inside the facility and request a refund, and addressing such complaints requires considerable effort and time.

There is a possibility of theft, as a relatively large quantity of coins accumulates in washing machines and dryers.

Female users are concerned that undergarments and other personal items being dried may be seen through the glass window of the door or stolen, making them hesitant to step out of the laundry while the dryer is in operation.

Users who have gone outside the laundry will not know when washing or drying is complete, due to which clothes are left unattended for a longer time, leading to a reduced utilization rate of the laundry machine.

Therefore, the inventor considered addressing these problems by devising a system that allows users to operate various functions of the laundry machine using a smartphone by installing specialized application software on the smartphone and sending notifications to the smartphone when the washing or drying process is complete.

However, since large-scale coin-operated laundries have many users operating a plurality of laundry machines simultaneously, even such a system is vulnerable to the possibility of multiple users trying to operate the same laundry machine due to input mistakes, etc., on the smartphone.

To solve such a problem, cited reference 3 discloses a technology in which a linkage unit is provided on at least one surface of the laundry machine and a controller that uses the linkage unit to link the smartphone of the user to one laundry machine and then outputs an operation command to the laundry machine linked to the smartphone based on an operation request signal received from the smartphone.

### [Prior Art Documents]

### [Patent Document]

[Patent Document 1] Unexamined Patent Publication No. 2001-129300
[Patent Document 2] Unexamined Patent Publication No. 2006-262942
[Patent Document 3] Republished Patent Publication No. 2019-077649

### [Summary of the Invention]

### [Problems to be Solved by the Invention]

The self-service laundry system described in cited reference 3 required users to download specialized application software to their smartphones, which was inconvenient for the users.

The purpose of the present invention is to provide a self-service laundry system that can enhance user convenience and other benefits in view of the above situation.

### [Means for Solving the Problems]

The self-service laundry system of the invention described in claim 1 is characterized by being equipped with a laundry machine having at least one of the washing and drying functions, and a controller that communicates with the smartphone of the user and operates and controls the laundry machine based on the communication results, wherein the laundry machine is provided with a linkage unit and the controller uses the linkage unit to link the smartphone to the laundry machine and operates and controls the laundry machine based on operation request signals from the smartphone and the smartphone communicates with the controller using a predetermined web page accessed through a web browser.

The self-service laundry system of the invention described in claim 2 is characterized by being equipped with a plurality of laundry machines having at least one of the washing and drying functions, and a controller that communicates with the smartphones of a plurality of users and operates and controls the laundry machine based on the communication results, wherein at least one surface of the plurality of laundry machines is provided with a linkage unit and the controller has the linkage means to link one of the smartphones of the users to one of the laundry machine using the linkage unit, after linking, an operation command output means to output an operation command to the laundry machine linked to the smartphone based on an operation request signal from the smartphone, and the smartphone communicates with the controller using a predetermined web page accessed through a web browser.

The self-service laundry system of the invention described in claim 3 is the self-service laundry system, as described in claim 2, characterized by a linkage unit that is a two-dimensional code or a short-range wireless communication device.

The self-service laundry system of the invention described in claim 4 is the self-service laundry system as described in claim 2 or claim 3, characterized by a plurality of laundry machines installed in the accommodation facility and a controller capable of outputting operation commands to the laundry machine linked to the smartphone only when an operation request signal is received from the smartphone via the wireless local network.

### [Effect of the Invention]

According to the present invention, specialized application software is not required to be downloaded on the smartphone as the smartphone and controller communicate through a predetermined web page accessed through the web browser, which enhances user convenience.

### [Brief Description of the Drawings]

[Fig. 1] Schematic diagram of the self-service laundry system according to the first embodiment.
[Fig. 2] Schematic diagram of the server according to the first embodiment.
[Fig. 3] Flowchart showing the overall operation of the self-service laundry system according to the first embodiment.
[Fig. 4] Front view of the smartphone showing the password input screen in the first embodiment.
[Fig. 5] Flowchart showing the procedure of the output control of operation command in the first embodiment.
[Fig. 6] Front view showing the smartphone when it receives the recognition signal in the first embodiment.
[Fig. 7] Front view showing the smartphone when it receives the operation cycle signal in the first embodiment.
[Fig. 8] Front view showing the smartphone when it receives the payment signal in the first embodiment.
[Fig. 9] Flowchart showing the procedure of the completion warning process in the first embodiment.
[Fig. 10] Front view showing the smartphone when it receives the first completion warning signal in the first embodiment.
[Fig. 11] Front view showing the smartphone when it receives the second completion warning signal in the first embodiment.
[Fig. 12] Flowchart showing the error handling procedure in the first embodiment.
[Fig. 13] Front view showing the smartphone when it receives the error signal in the first embodiment.
[Fig. 14] Schematic diagram of the self-service laundry system according to the second embodiment.
[Fig. 15] Schematic diagram of the self-service laundry system according to the third embodiment.

### [Description of the Embodiments]

### [First embodiment]

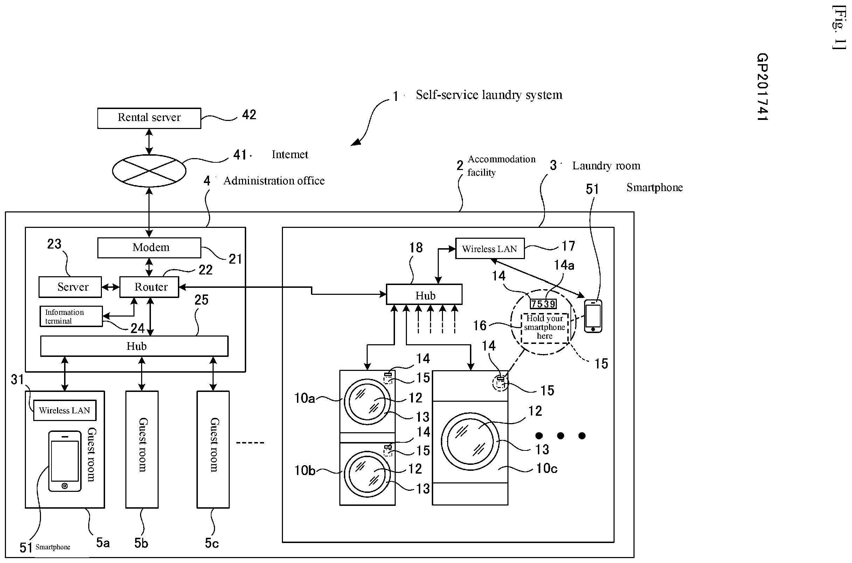

The first embodiment of the present invention is explained in detail with reference to Fig. 1 to Fig. 13. The first embodiment is characterized in that the transmission of an operation request signal from the smartphone to the controller is performed with the input of a one-time password, web page and short-range wireless communication and the fee is paid by credit card.

### <Configuration of the First Embodiment>

Fig. 1 shows the schematic diagram of the self-service laundry system according to the first embodiment.

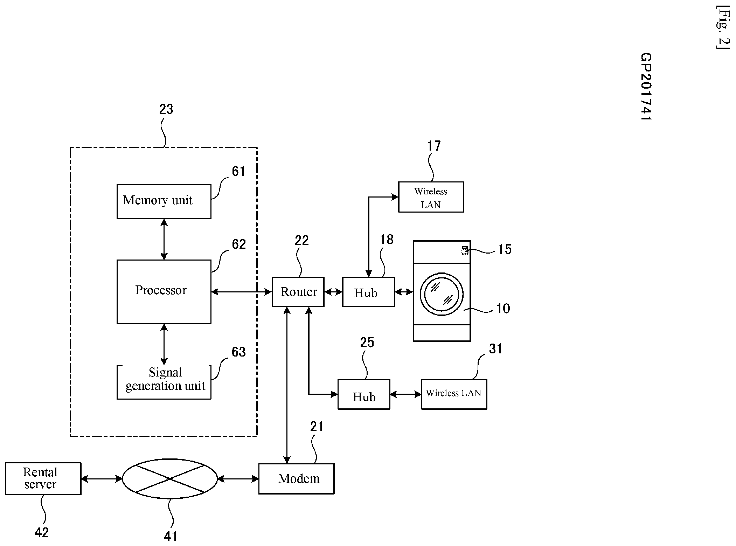

Fig. 2 shows the schematic diagram of the server according to the first embodiment.

### <Overall Configuration of the Self-service Laundry System>

As shown in Fig. 1, self-service laundry system 1, according to the first embodiment, consists of a plurality of laundry machines 10 (10a, 10b, 10c....) comprising washing machines and dryers, etc., wireless LAN 17 and hub 18 installed in laundry room 3 of the accommodation facility 2 (hotel, Japanese inn, etc.); modem 21, router 22, server 23, administrator information terminal 24 (personal computer, smartphone, etc. Hereinafter referred to as "administrator information terminal"), and hub 25 installed in administration office 4 of accommodation facility 2; wireless LAN 31 installed in guest rooms 5 (5a, 5b, 5c....), Internet 41, rental server 42 installed in the facilities of the telecom operator and smartphone 51 owned by the user.

Each laundry machine 10 and wireless LAN 17 in laundry room 3 is connected to router 22 in administration office 4 via hub 18.

Router 22 in administration office 4 is connected to Internet 41 via modem 21, and Internet 41 is connected to rental server 42.

Server 23, information terminal 24 operated by the administrator of this system, and hub 25 are connected to router 22 in administration office 4. Hub 25 is connected to wireless LAN 31 installed in a plurality of guest rooms 5 (5a, 5b, 5c...).

### <Configuration of the Laundry Room>

Each laundry machine 10 is installed with display 14 that shows one-time password 14a as a unique identifier and transceiver 15 (linkage unit) for short-range wireless communication based on FeliCa (registered trademark). One-time password 14a is a randomly generated 4-digit number, which changes at predetermined time intervals (for example, 30-second intervals). On the front face of the laundry machine 10, display 16 indicates, "Please hold your smartphone here" at a location corresponding to transceiver 15.

In the case of a transceiver for short-range wireless communication with high security, a one-time password is not necessarily required.

Each laundry machine 10 is equipped with manually opening and closing door 13 with transparent glass window 12. Each laundry machine 10 is equipped with an electrically operated locking mechanism (not shown in the figure) to lock door 13, which locks door 13 in the closed state based on a command from server 23 installed in administration office 4. Glass window 12 is of instant dimming type using liquid crystals and can be instantly switched between transparent and opaque states based on commands from server 23.

Wireless LAN 17, based on the Wi-Fi (registered trademark) standard, is installed in laundry room 3 of accommodation facility 2. Smartphone 51 of the user in laundry room 3 is connected to server 23 installed in administration office 4 via wireless LAN 17.

### <Configuration of the Guest Room>

Wireless LAN 31 based on the Wi-Fi (registered trademark) standard is installed in guest rooms 5 (5a, 5b, 5c) of accommodation facility 2. Smartphone 51 of the user in guest room 5 is connected to server 23 installed in administration office 4 via wireless LAN 31.

Server 23 (controller) registers smartphone 51 when smartphone 51 accesses the predetermined web page accessed through a web browser.

### <Configuration of the Administration Office>

Server23 in the administration office 4 is connected to Internet 41 via router22 and modem 21, to rental server 42 via Internet 41, and to predetermined web pages built on rental server 42.

### <Connection of the Smartphone>

Smartphone 51 brought into guest room 5 of the accommodation facility 2 is connected to router 22 via wireless LAN 31 and hub 25 in administration office 4, and from router 22 to Internet 41 via modem 21, further to rental server 42 via Internet 41, and to various predetermined web pages built on rental server 42 via the web browser.

On the other hand, smartphone 51 brought into laundry room 3 is connected to router 22 in administration office 4 via wireless LAN 17 and hub 18, from router 22 to Internet 41 via modem 21, further to rental server 42 via Internet 41, and to various predetermined web pages built on rental server 42 via the web browser.

Thus, smartphone 51, brought into guest room 5 or laundry room 3, communicates with server 23 via a predetermined web page for self-service laundry system 1 built on rental server 42.

### <Connection of the Laundry Machine>

Each laundry machine 10 is connected to router22 in administration office 4 via hub 18 and communicates from router 22 with server 23 and administrator information terminal 24 for the administrator of laundry room 3 of the accommodation facility

### <Configuration of the Server>

As shown in Fig. 2, server 23 comprises memory unit 61 that stores operation modes, user information, etc.; processor 62 that performs judgment processing and signal output based on input signals, etc., from smartphone 51 via wireless LAN 17, 31 (see Fig. 1) and rental server 42; and signal generator 63 that generates operation command signals to laundry machine 10, signals, etc., to smartphone 51 and administrator information terminal 24, based on the judgment results of processor 62.

### <Operation of the First Embodiment>

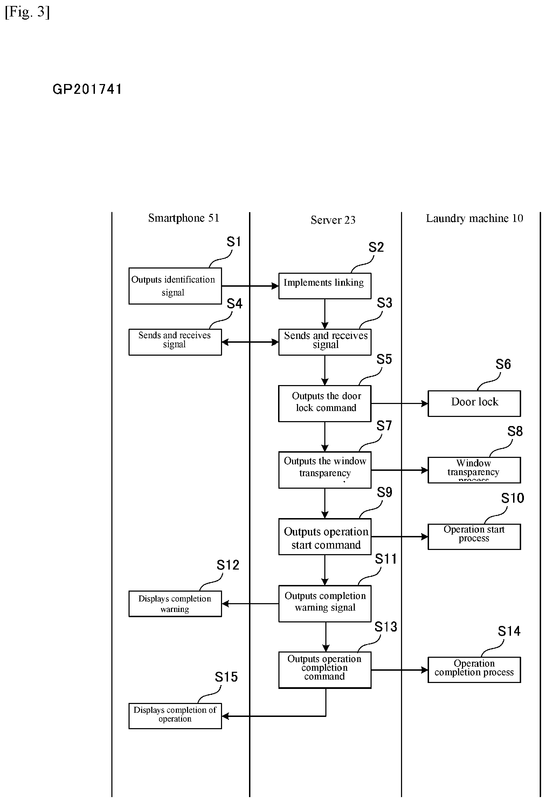

Fig. 3 is a flowchart showing the overall operation of the self-service laundry system according to the first embodiment.

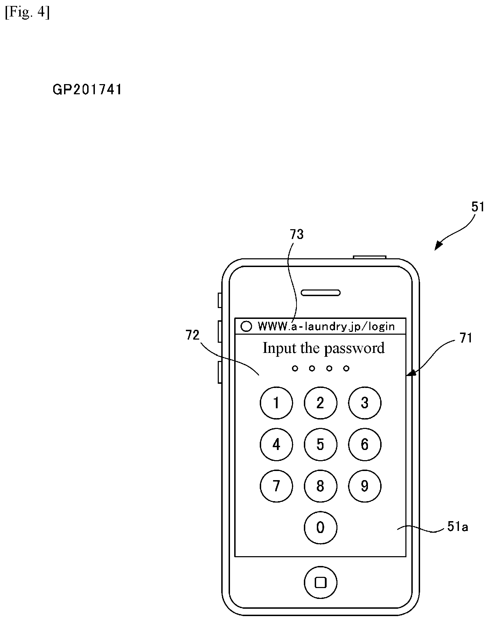

Fig. 4 is a front view of the smartphone showing the password input screen in the first embodiment.

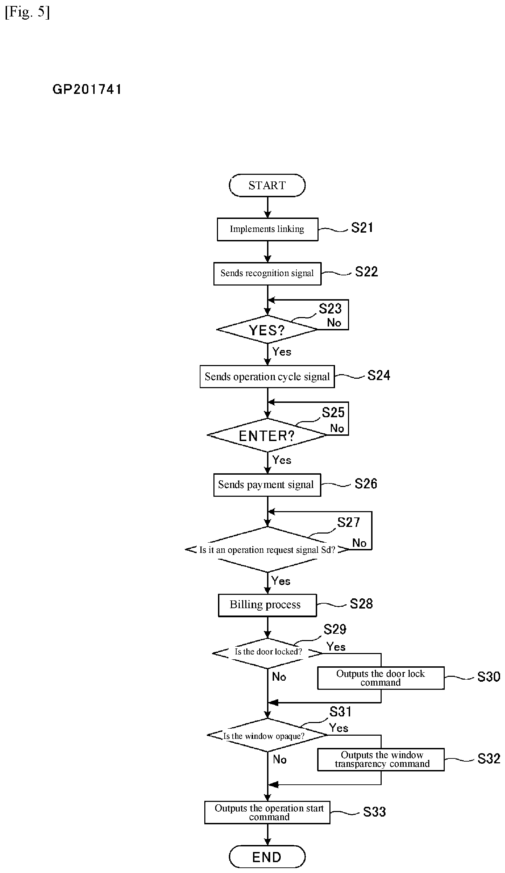

Fig. 5 is a flowchart showing the procedure of the output control of operation command in the first embodiment.

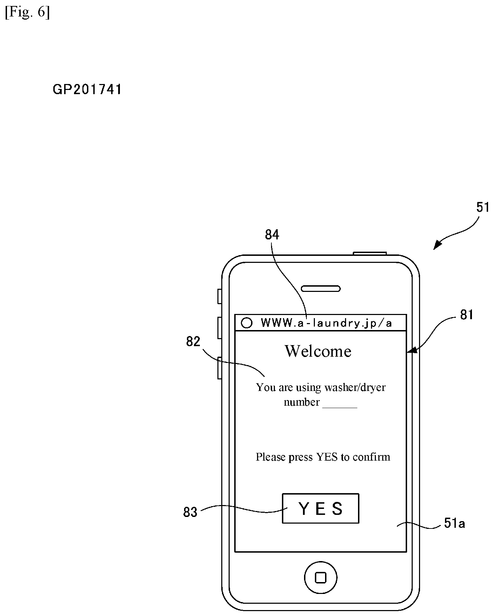

Fig. 6 is a front view showing the smartphone that received the recognition signal in the first embodiment.

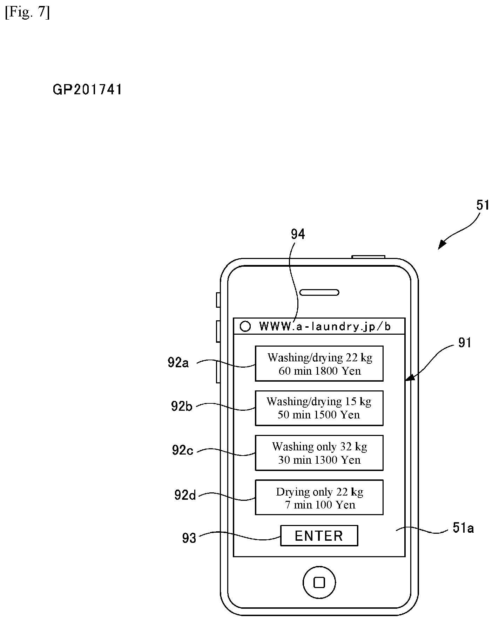

Fig. 7 is a front view showing the smartphone that received the operation cycle signal in the first embodiment.

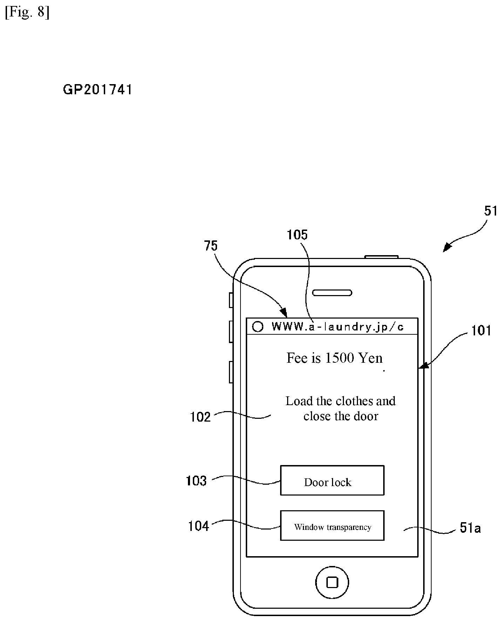

Fig. 8 is a front view showing the smartphone that received the payment signal in the first embodiment.

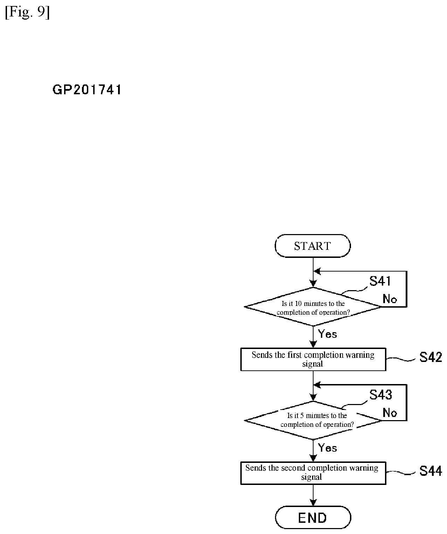

Fig. 9 is a flowchart showing the procedure of the completion warning process in the first embodiment.

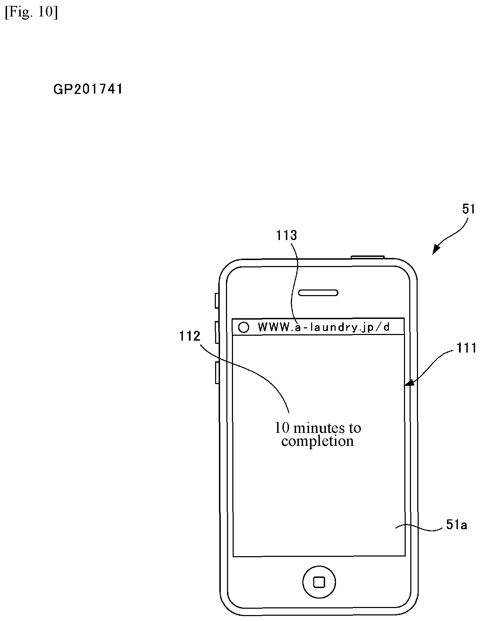

Fig. 10 is a front view showing the smartphone that received the first completion warning signal in the first embodiment.

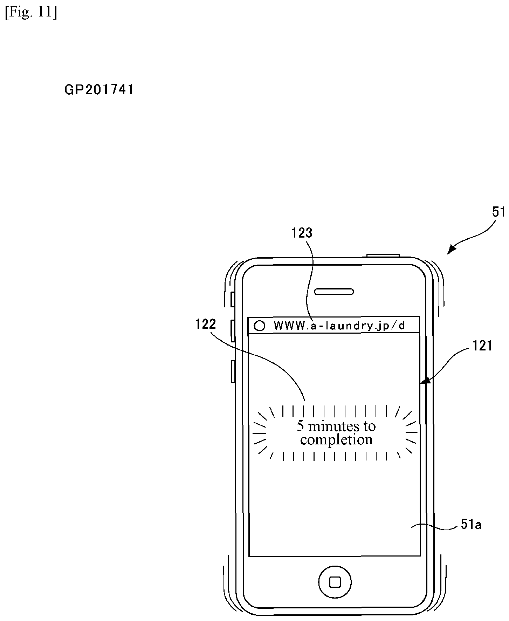

Fig. 11 is a front view showing the smartphone that received the second completion warning signal in the first embodiment.

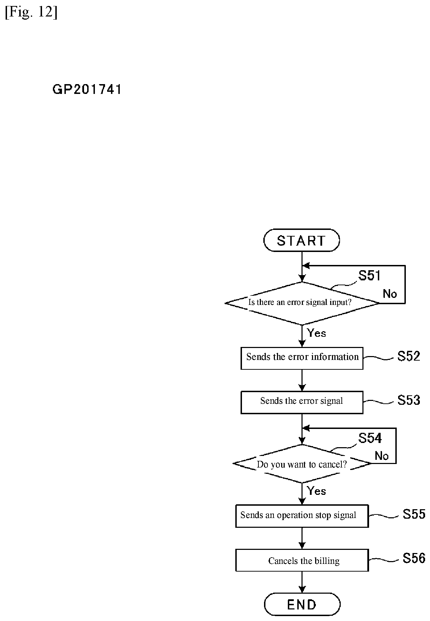

Fig. 12 is a flowchart showing the error-handling procedure in the first embodiment.

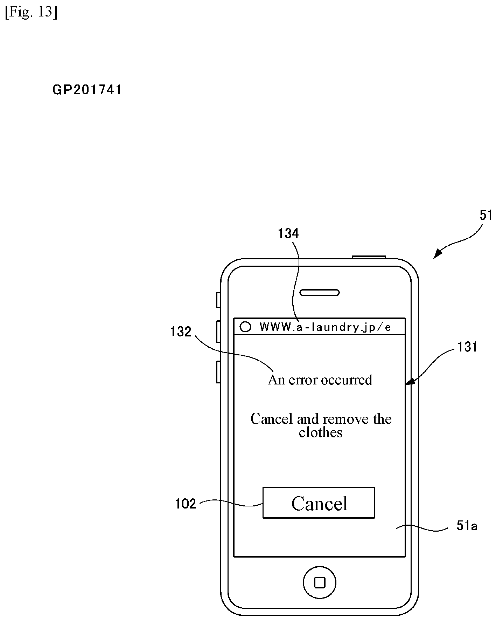

Fig. 13 is a front view showing the smartphone that received the error signal in the first embodiment.

In Fig. 3, the exchange of signals and information between server 23 and laundry machine 10 is carried out via various predetermined web pages on rental server 42 accessed through a web browser. The exchange of signals and information between server 23 and smartphone 51 is also carried out via various predetermined web pages on rental server 42 accessed through a web browser.

When the user uses laundry machine 10 in laundry room 3 of accommodation facility 2 for the first time, the user accesses the 1 st predetermined web page (not shown in the figure) of rental server 42 connected to the web browser, with a QR code, etc. (affixed in rooms, coin-operated laundries, etc.) or transceiver 15 of the short-range wireless communication in guest room 5 or laundry room 3 of accommodation 2, using smartphone 51.

Next, the user performs user registration using the 1st predetermined web page of rental server 42 accessed through a web browser on smartphone 51. User registration involves registering name, address, smartphone number, and payment information (credit card information) on server 23. In this case, the user registration can be performed manually, or smartphone 51 can be automatically linked with the Mac address, etc. Thus, once user registration is completed, issuing instructions given in the past or operating the coin-operated laundry without entering the ID becomes possible.

Users who come to laundry room 3 of the accommodation facility select laundry machine 10 according to the type and quantity of clothes to wash or dry. The user then displays the 2nd predetermined web page of rental server 42 accessed through a web browser via an Internet connection using wireless LAN 17 on smartphone 51. The 2nd predetermined web page can also be displayed automatically after the user registration. Then, as shown in Fig. 4, password input screen 72 is displayed employing the 2nd predetermined web page 71 (login page) on display 51a of smartphone 51 through the web browser, and one-time password 14a displayed on display 14 of laundry machine 10 is entered on information terminal 51. On the upper side of display 51a, there is display section 73, which shows the address of the 2nd predetermined web page 71, etc.

After this, when the user holds smartphone 51 over transceiver 15, as shown in step S1 in Fig. 3, an identification signal Si corresponding to smartphone 51 and laundry machine 10 is transmitted from smartphone 51, and the identification signal Si is input to server 23 via the 3rd predetermined web page of rental server 42 accessed through a web browser. Smartphone 51 and transceiver 15 are set to communicate at a distance of several centimeters or less.

When identification signal Si is input, server 23, as shown in step S2 of Fig. 3 and step S21 of Fig. 5, links smartphone 51 and laundry machine 10 based on identification signal Si, except when laundry machine 10 is in use by another user and executes the procedure of the output control of operation command shown in the flowchart of Fig. 5.

When output control of operation command starts, server 23 and smartphone 51 send and receive signals through the 4th predetermined web page of rental server 42 accessed through a web browser in steps S3 and S4 of Fig. 3, and server 23 sends the recognition signal to smartphone 51 via wireless LAN 17 in step S22 of Fig. 5. On smartphone 51 that received the recognition signal, as shown in Fig. 6, message 82 "Welcome

You are using washer/dryer number ________ Please touch on YES to confirm" and "YES" button 83 of the 5th predetermined web page 81 of rental server 42 are displayed on screen 51a. On the upper side of display 51a, there is display section 84, which shows the address of the 5th predetermined web page 81, etc.

Server 23 judges whether the user touched the "YES" button 83 in step S23 of Fig. 5. If the judgment is YES, smartphone 51 and server 23 send and receive signals via the 6th predetermined web page of rental server 42 accessed through a web browser and the operation cycle signal is sent to smartphone 51 in step S24 of Fig. 5. On smartphone 51 that received the operation cycle signal, as shown in Fig. 7, "Operation Cycle" button 92 (92a-92d) corresponding to the "selected laundry machine 10" of the 6th predetermined web page 91 and "ENTER" button 93 are displayed on screen 51a by the predetermined web page. On the upper side of display 51a, there is display section 94, which shows the address of the 6th predetermined web page 91, etc. Depending on the type and number of clothes, the user selects the desired "Operation Cycle" button 92 and then touches the "ENTER" button 93.

Server 23 judges whether the user touched the "ENTER" button 93 in step S25 of Fig. 5. If the judgment is YES, smartphone 51 and server 23 send and receive signals via the 7th predetermined web page of rental server 42 accessed through a web browser and the payment signal is sent to smartphone 51 in step S26 of Fig. 5. On smartphone 51 that received the payment signal, as shown in Fig. 8, message 102 "Usage fee is ______ yen

Load the clothes and close the door", "Door Lock" button 103, and "Window Transparency" button 104 are displayed on screen 51a by the 7th predetermined web page 101. On the upper side of display 51a, there is display section 105, which shows the address of the 7th predetermined web page 101, etc. The user can select (touch) the "Door Lock" button 103 and "Window Transparency" button 104 to lock door 13 or make glass window 12 opaque while the laundry machine 10 is in operation.

The user confirms the usage fee, selects the "Door Lock" button 103 and "Window Transparency" button 104, and then holds smartphone 51 over transceiver 15. The smartphone 51 transmits operation request signal Sd, and the operation request signal Sd is input to server 23 via wireless LAN 17, hub 18, router 22, modem 21, Internet 41 and web browser and the 8th predetermined web page of rental server 42 of the rental server accessed by the web browser.

Server 23 judges whether the user has input the operation request signal Sd in step S27 of Fig. 5, and if the judgment is YES, the billing process is performed in step S28 of Fig. 5. The billing process is performed by communicating with the credit card company via Internet 41 based on the payment information mentioned above.

Once the billing in step S28 of Fig. 5 is completed, server 23 determines whether the "Door Lock" button 103 was touched in step S29 of Fig. 5. If the judgment is YES, the door lock command is output to laundry machine 10 via the 9th predetermined web page of rental server 42 accessed by the web browser in step S30 of Fig. 5 (step S5 of Fig. 3). As a result, laundry machine 10 locks the door, as shown in step S6 of Fig. 3.

Next, server 23 judges whether the "Window Transparency" button 104 was touched in step S31 of Fig. 5. If the judgment is YES, the window transparency command is output to laundry machine 10 via the 10th predetermined web page of rental server 42 accessed through a web browser in step S32 of Fig. 5 (step 7 of Fig. 3). As a result, laundry machine 10 makes glass window 12 opaque, as shown in step S8 of Fig. 3.

After this, server 23 outputs an operation start command in step S33 of Fig. 5 (step S9 of Fig. 3) to laundry machine 10 via the 11th predetermined web page of rental server 42 accessed through a web browser and ends the operation start command control. Laundry machine 10, which receives the operation start command, initiates operation in the operation mode selected by the user, as shown in step S10 of Fig. 3.

Server 23 sequentially sends each command of the output control of operation command and results of the billing process to administrator information terminal 24. As a result, the administrator can recognize the operating status and sales of laundry machine 10 in laundry room 3 of the accommodation facility in real time.

### (Completion Warning Process)

When laundry machine 10 starts operation, server 23 executes the completion warning process, and the flowchart in Fig. 9 shows the steps of the procedure. When the completion warning process starts, server 23 repeatedly judges at predetermined time intervals, whether the time reached is 10 minutes before the operation end time in step S41 of Fig. 9. If the judgment is Yes, server 23 and smartphone 51 send and receive signals via the 12th predetermined web page of rental server 42 accessed through a web browser, and server 23 sends the first completion warning signal to the 12th predetermined web page in step S42 of Fig. 9 (step 11 of Fig. 3). When the first completion warning signal is received by the predetermined web page, smartphone 51, by processing step S12 of Fig. 3, displays message 112, "10 minutes to complete", on screen 51a of the 12th predetermined web page 111, indicating that the operation will end in 10 minutes, as shown in Fig. 10 and plays a ring tone at a low volume. On the upper side of display 51a, there is display 113, which shows the address of the 12th predetermined web page 111, etc. The completion warning signal is received by smartphone 51 via a predetermined web page on rental server 42, even if the user is in guest room 5.

Next, server 23 repeatedly judges at predetermined time intervals whether the time reached is 5 minutes before the operation end time in step S43 of Fig. 9. If the judgment is Yes, server 23 and smartphone 51 send and receive signals via the 13th predetermined web page of rental server 42 accessed through a web browser, and server 23 sends the second completion warning signal to the 13th predetermined web page in step S44 of Fig. 9 (step 11 of Fig. 3). When smartphone 51 receives the second completion warning signal on the 13th predetermined web page, smartphone 51 processes step S12 of Fig. 3 and as shown in Fig. 11, displays message 122 "5 minutes to complete" by flashing on screen 51a of the 13th predetermined web page 121 indicating that the operation will end in 5 minutes, and activates ring tone and vibrator functions. On the upper side of display 51a, there is display section 123, which shows the address of the 13th predetermined web page 121, etc.

Here, smartphone 51 can communicate with various predetermined web pages built on rental server 42 with both wireless LAN 17 installed in laundry room 3 and wireless LAN 31 installed in guest rooms 5 (5a, 5b, 5c....), for example, users who have returned to guest room 5 can go back to laundry room 3 of the accommodation facility before the completion of the operations of laundry machine 10, thereby improving the operation rate of laundry machine 10.

When it is time to end the operation of laundry machine 10, server 23 outputs the operation completion command to laundry machine 10 via the 14th predetermined web page of rental server 42 accessed via the web browser in step S13 of Fig. 3. Laundry machine 10, as shown in step S14 of Fig. 3, performs the operation completion process on receiving the operation completion command, makes glass window 12 transparent and unlocks the door lock.

When the 14th predetermined web page receives the operation completion command, smartphone 51 sends and receives signals to and from server 23 via the 15th predetermined web page of rental server 42, accessed by the web browser in laundry room 3 or guest room 5 and flashes an operation completion message on screen 51a of the 15th predetermined web page in step S15 of Fig. 3.

Making glass window 12 transparent and unlocking the door lock of step S14 in Fig. 3 can be selected by operations on the 16th predetermined web page displayed on the screen of the smartphone 51 in laundry room 3 or guest room 5.

Server 23 continuously performs error handling procedures, as indicated in the flowchart of Fig. 12, in parallel with the output control of operation command.

### (Error Handling)

When error handling is started, server 23, in step S51 of Fig. 12, repeatedly judges at predetermined time intervals whether an error signal is input from laundry machine 10 in laundry room 3 of the accommodation facility.

For example, inputting an error signal to server 23 may lead to suspending the selected drying process of laundry machine 10.

When some error occurs in laundry machine 10 and the judgment in step S51 is Yes, server 23 and smartphone 51 send and receive signals via the 16th predetermined web page built on rental server 42 accessed by the web browser, and server 23 sends the error information (what error occurred in which laundry machine 10) to administrator information terminal 24 and the terminal (not shown in the figure) of the maintenance company in step S52, and the error signal to 17th predetermined web page corresponding to smartphone 51 in step S53. If an error signal is received by the 16th predetermined web page, as shown in Fig. 13, message 132, "Error has occurred Cancel and remove the clothes", and "Cancel" button 133 are displayed on screen 51a of the smartphone 51 on the 17th predetermined web page 131 in laundry room 3 and guest room 5. On the upper side of display 51a, there is display section 134, which shows the address of the 17th predetermined web page 131, etc.

The administrator or maintenance company personnel goes to laundry room 3 of the accommodation facility in response to the error information to implement measures, such as suspending the usage of or repairing laundry machine 10. The user touches the "Cancel" button 92 according to the screen display on smartphone 51.

In addition, for example, error information can be displayed on the information terminal installed in guest room 5 of the user, a phone call can be initiated (for example, an automated voice message) and displayed on the display of the guest room or sent by email.

Users can take measures promptly based on the information.

In particular, users can download a dedicated application on smartphone 51, and by utilizing this dedicated application, such as display (and possibly audio in some instances), users can reliably detect issues occurring more reliably compared to methods like emails.

As a result, users can promptly take various measures (such as removing the clothes and putting them in other equipment), preventing, for example, the likelihood of discovering that the selected drying process has stopped when the users are about to leave the facility.

This is one of the advantages of a dedicated application since the probability of confirmation through methods such as notifications by email, without using dedicated applications, is lower.

Next, server 23 judges whether the "Cancel" button 102 is touched in step S54 and repeats the judgment in step S54 while this judgment is No. Server 23, when the user touches the "Cancel" button 102, and the judgment in step S54 is Yes, sends an operation stop signal to laundry machine 10 via the 18th predetermined web page of rental server 42 accessed by the web browser in step S55.

The rotation of the washing and drying drums in laundry machine 10, which received the operation stop signal, stops, and if washing or rinsing is in progress, door 13 is unlocked after draining the water. The user can remove clothes from laundry machine 10 and wash or dry them in other laundry machines 10.

Next, server 23 cancels (refunds) the charges incurred through the billing process described in step S56 and terminates error handling.

### <Summary of the First Embodiment>

The following is a summary of the configuration and operations of the first embodiment of the present invention, which is characterized by a self-service laundry system 1 consisting of a plurality of laundry machines 10 (10a, 10b, 10c...) having at least one of washing and drying function, the self-service laundry system is equipped with a control unit (server 23) that communicates with a plurality of smartphones (smartphone 51) of the users and operates and controls laundry machine 10 according to the communication results, at least one surface of the plurality of laundry machines 10 is equipped with a linkage unit (transceiver 15), the control unit (server 23) has a linkage means (server 23 and a program to execute step S21 in Fig. 5) to link one of the smartphones (smartphone 51) of the users and one of the laundry machines 10 using the linkage unit (transceiver 15), after the linking, an operation command output means (server 23 and a program to execute steps S29-S33 in Fig. 5) to output operation commands to laundry machine 10 linked to the smartphone (smartphone 51), based on operation request signals from the smartphone (smartphone 51), and smartphone (smartphone 51) communicates with the controller using the predetermined web page accessed by the web browser.

The linkage unit (transceiver 15) is a two-dimensional code or a short-range wireless communication device.

The plurality of laundry machines are installed in the accommodation facility, and the controller capable of outputting operation commands to the laundry machine is linked with the smartphone (smartphone 51) only when the operation request signal is received from the smartphone (smartphone 51) via the wireless local network of the accommodation facility.

According to this configuration of self-service laundry system 1, a specialized application software is not required to be downloaded as the smartphone (smartphone 51) communicates with the controller (server 23) using a predetermined web page accessed through the web browser, which provides enhanced convenience to the user and other benefits.

A more detailed description of convenience is that it is challenging to request users to install (download) a specialized system (application) on their smartphones (smartphone 51) during their stay at accommodation facilities, such as hotels and Japanese inns.

Since self-service laundry system 1, in the first embodiment of the present invention, uses web pages to perform the processing, users (customers) only need to access the predetermined web page using the smartphone (smartphone 51) to complete the preparation, which enhances convenience.

Since it is a problem if persons who are not in the accommodation facility can give or browse the instructions, the system has been designed so that giving and browsing instructions is possible by only smartphones (smartphone 51) connected to wireless LAN 17, 31 (in the case of this embodiment, Wi-Fi (registered trademark)) inside the accommodation facility.

Furthermore, predetermined web pages can be accessed using QR codes (affixed in rooms, coin-operated laundries, etc.), further enhancing convenience.

If the predetermined web page has been accessed once using a smartphone (smartphone 51), that smartphone (smartphone 51) can be linked with the Mac address, and instructions issued in the past and operations of the coin-operated laundries are possible without entering the ID.

When that user (customer) checks out of the hotel, the user will not be able to browse as the smartphone (smartphone 51) will not be connected to wireless LAN 17, 31, providing security to other users.

### [Second Embodiment]

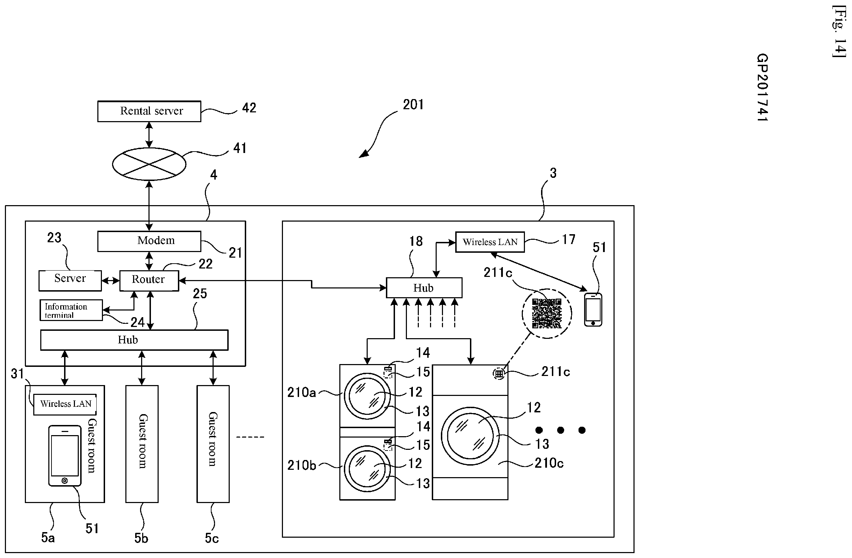

The second embodiment of the present invention is explained below in detail, referring to Fig. 14. The second embodiment is characterized by the transmission of the operation request signal from the smartphone, performed by reading identification codes and fee payments executed by prepaid cards.

### <Configuration of the Second Embodiment>

Fig. 14 shows the schematic diagram of the self-service laundry system according to the second embodiment.

Even though the hardware of the self-service laundry system 201 in the second embodiment has adopted the same configuration as the first embodiment, laundry machine 210 is not equipped with a display to show the one-time password (OTP) or a transceiver for short-range wireless communication. As shown in Fig. 14, each laundry machine 210 is affixed with a label 211 (211a, 211b, 211c...) (linkage unit) (hereinafter, referred to as identification code) printed with a unique identification code. Two-dimensional codes, such as QR codes (registered trademarks), are preferable as the linkage unit (identification code 211).

The above concludes the description of specific embodiments, but the present invention is not limited to these modes. For example, while the first and second embodiments implement billing through credit cards, prepaid cards, debit cards, and usage fees of smartphones can also be used. For example, while the second embodiment implements billing by prepaid card, implementation using credit cards, debit cards, and usage fees of smartphones is also possible. In addition, points may be awarded for each use of the laundry machine, which can be used to offset a portion of the usage fees. Although the predetermined web page accessed by the web browser was built on rental server 42, the predetermined web page may be built on server 23, installed in administration office 4.

### [Third Embodiment]

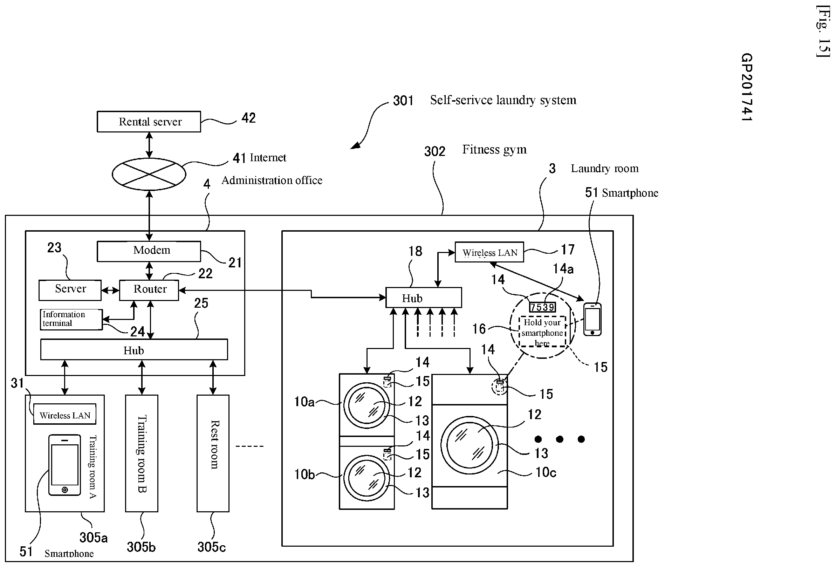

The third embodiment of the present invention is explained below in detail, referring to Fig. 15. The modification of the third embodiment is an application of the invention of the first embodiment to a fitness gym instead of an accommodation facility.

### <Configuration of the Third Embodiment>

Fig. 15 shows the schematic diagram of the self-service laundry system according to the third embodiment.

As shown in Fig. 1, self-service laundry system 301, according to the third embodiment, consists of a plurality of laundry machines 10 (10a, 10b, 10c....) comprising washing machines, dryers, etc., wireless LAN 17 and hub 18 installed in laundry room 3 of fitness gym 302; modem 21, router 22, server 23, administrator information terminal 24, and hub 25 installed in administration office 4 of fitness gym 302; wireless LAN 31 installed in rooms (training A305a, training A305b, rest room 305c....) for users, Internet 41, rental server 42 installed in the facility of the telecom operator and smartphone 51 owned by the user.

According to this configuration, the same effect as in the first embodiment shown in Fig. 1 to Fig. 13 can also be achieved with the self-service laundry system 301 used in fitness gym 302.

The application of the present invention is not limited to accommodation facilities and fitness gyms but also can be applied to various community centers, playground facilities (such as amusement parks), public baths, large public bathhouses, weekly apartments, rental homes with coin-operated laundries, hospitals, etc.

### [Industrial Applicability]

The self-service laundry system of the present invention can be effectively used by businesses and corporations that operate accommodation facilities, fitness gyms, various community centers, playground facilities, public baths, large public bathhouses, weekly apartments, rental homes with coin-operated laundries, hospitals, etc.

Furthermore, not only smartphones but also room keys and locker keys (shoe box, clothes locker) can be used.

In the case of room keys, operations can be performed from the information terminals (personal computers) installed in each room for users.

In the case of locker keys, operations can be performed using various operation terminals within the facility.

In addition, locker keys can be operated with the smartphone owned by each user. In this case, for example, an identification code (QR code (trademark), bar code) is assigned to the locker key, and the locker key is linked to the smartphone by recognizing the identification code with the smartphone camera, etc.

### [Explanation of the Reference Numerals]

- 1: Self-service laundry system
- 2: Accommodation facility
- 3: Laundry room
- 4: Administration office
- 5: Guest room
- 10: Laundry machine
- 11: Identification code (linkage unit)
- 12: Glass window
- 13: Door
- 14a: One-time password
- 15: Transceiver (linkage unit)
- 17,31: Wireless LAN
- 18,25: Hub
- 21: Modem
- 22: Router
- 23: Server
- 24: Information terminal
- 41: Internet
- 42: Rental server
- 51: Smartphone

## Claims

1. A self-service laundry system comprising laundry machine that is **characterized by** being equipped with at least one of the washing and drying functions;
A controller that communicates with smartphones of users and operates and controls the laundry machine based on the communication result;
A linkage unit is installed in the laundry machine;
The controller
links the smartphone to the laundry machine with the smartphone reading data from the linkage unit, and operates and controls the laundry machine based on operation request signals from the smartphone; and
A smartphone that communicates with the controller using predetermined web pages accessed through a web browser.

2. A self-service laundry system comprising a plurality of laundry machines, **characterized by** being equipped with at least one of the washing and drying functions;
A controller that communicates with smartphones of a plurality of users and operates and controls the laundry machine based on the communication results;
A linkage unit is installed on at least one surface of the plurality of laundry machines;
A controller
with a linkage means that links one smartphone of a user to one laundry machine using the linkage unit;
An operation command output means that outputs operation commands to the laundry machine linked to the smartphone based on the operation request signal from the smartphone after the linking; and
A smartphone that communicates with the controller using predetermined web pages accessed through a web browser.

3. The self-service laundry system described in claim 2 **characterized by** a linkage unit, which is a two-dimensional code or a short-range wireless communication device.

4. A self-service laundry system described in claim 2 or claim 3 that is **characterized by** a plurality of laundry machines installed in the accommodation facility; and
A controller that is capable of outputting operation commands to the laundry machine linked with the smartphone only when the operation request signal is received from the smartphone via the wireless local network of the accommodation facility.
